# EUROPEAN PATENT APPLICATION

(11) **EP 1 830 506 A1**
(43) Date of publication of application: **05.09.2007**
(21) Application number: 06290361.2
(22) Date of filing: 02.03.2006
(51) Int. Cl.: H04L 1/04, H04B 7/06

(54) **Method for receiving a signal transmitted over several channels and corresponding device**

(71) Applicant: Dibcom, 91120 Palaiseau (FR)
(72) Inventor: De Marchi, Stéphane, 75015 Paris (FR)
(74) Representative: Blot, Philippe Robert Emile

(57) **Abstract**

The present invention concerns a method for receiving a signal comprising bursts of data transmitted over several channels, comprising determining (6) a reference channel and receiving (8) the bursts from said reference channel, characterized in that it also comprises monitoring (10) faults in the reception of the data from said reference channel and on detection of a fault, receiving (14) the same data from another channel.

## Description

The present invention relates to reception of signals comprising bursts containing data packets transmitted over several channels.

It is common to receive a same signal over several channels and when the transmitted signal comprises separated bursts of data it is possible to switch from one channel to another to improve the reception conditions.

This is the case, for example, for reception according to the DVB-H standard recommendation in which one DVB-H signal is received with time slicing at different frequencies, i.e. from different channels. One signal or service is transmitted by bursts in a carrousel transmission. The same signal is transmitted at different frequencies with a time lag, these frequencies forming disjointed supports for the signal.

The receiver evaluates the signal quality over a first channel and decides eventually to find other channels on which the same DVB-H signal is broadcasted. If the signal quality is better on another channel, then the receiver decides to switch from the first channel to the other one.

The evaluation of the quality of one channel is achieved by statistic measurements over relatively long periods of time. Usually, only the signal from the reference channel is received and processed completely. The signal from the other channels is only monitored to evaluate its quality, for example by periodic estimation of a sample. In some embodiments, the quality of the others channels is monitored only when the quality of the reference channel is not sufficient.

When switching from one channel to another, the continuity of the reception is ensured by a seamless switching resulting from the standard recommendation that imposes that the transmitted times of the signal on each frequency are disjointed enough and that the data bursts on each frequency are exactly the same.

However, the bursts are received from the reference channel and in case the quality of that channel varies during the time period over which the evaluation of quality is achieved, the quality of the reception is affected. Similarly, in case all the channels are deteriorated, the signal is not received correctly.

This is especially the case in mobile environments in which the different echo signals vary quickly.

Accordingly, it is desirable to develop a reception method and a corresponding device that can provide good quality of signal even in harsh environments.

It is an object of the invention to provide a new method of reception of a signal comprising bursts containing data packets as recited in claim 1.

Thanks to the invention it is possible to correct defaults in the reception of a data packet from the reference channel by use of the same data packet received from another channel with the same receiver.

Other features of the method of the invention are further recited in the dependant claims.

It is also an object of the invention to provide a corresponding device as recited in claim 12.

This and other aspects of the invention will be apparent from the following description, claims and from the drawings in which:
- Figure 1 is a flow chart of the method of the invention;
- Figure 2 is a time diagram of the received and delivered signals; and
- Figure 3 is a schematic diagram of a radio frequency receiver according to the present invention.

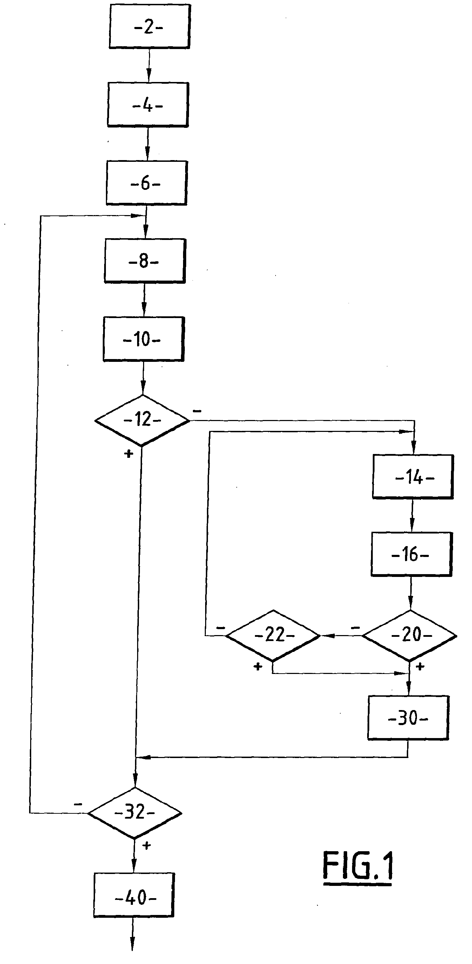

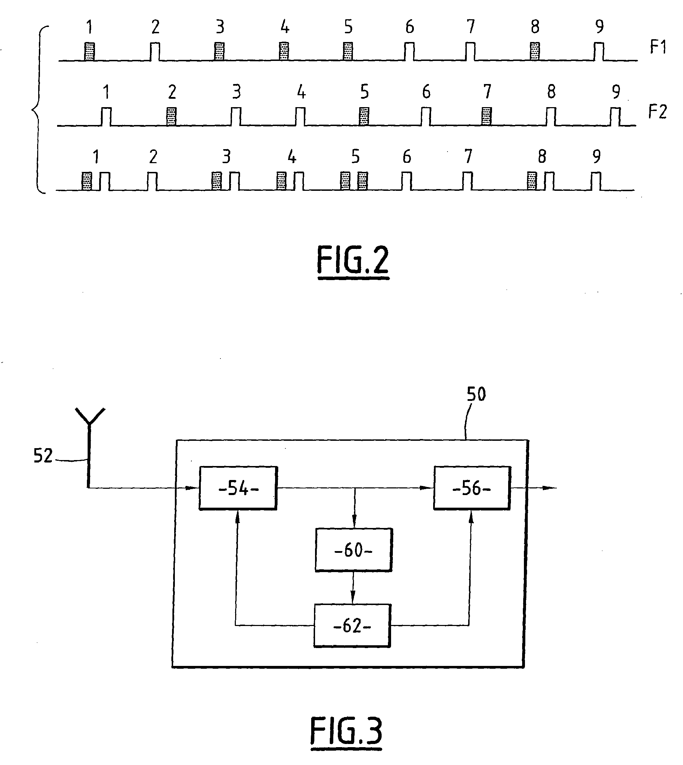

Referring now to figure 1, the method of the invention for receiving a signal is illustrated in view also of the time diagram of figure 2.

In the example, the transmitted signal is a DVB-H signal corresponding to the standard recommendation ETSI EN 302 304 V 1.1.1. Accordingly it is transmitted over several frequencies each of them providing a different channel, the bursts containing data packets on each frequency are exactly the same and the transmitted times on each frequency are disjointed.

The method of the invention begins with the reception 2 of a signal comprising a burst of data packets over a first channel followed by a step 4 of powering up the receiver.

The receiver is into a stand-by mode or idle mode between the bursts containing data packets to save power and at step 4 it is switched into a active mode in which its components are powered up to process the data packets.

The method continues at a step 6 of determination of a reference channel achieved in a conventional manner.

In the described example, the reference channel is determined in step 6 as the channel over which the signal is first received. Accordingly, every other channel will be delayed compared to the reference channel, referenced herein as F1.

With reference to figure 2, the first line corresponds to the data packets of one burst received over the reference channel F1.

Step 6 is followed by a step 8 of reception of a data packet from the reference channel F1.

At that stage, step 8 corresponds to the reception of data packet number 1 at the frequency of channel F1. The method then comprises a step 10 of monitoring the quality of the data packet upon reception which is achieved, for example, by computation of the signal to noise ratio for this data packet or by the use of an error detection code such as a CRC or the like.

Then a test 12 is achieved to determine if the quality of the received and monitored data packet is sufficient. This quality estimation is binary and is obtained by comparing the signal to noise ratio to a threshold. Of course, other type of criteria can be used to determine the quality level.

In the example, as represented in figure 2, data packets which signal to noise ratio is inferior to said predetermined threshold are represented in grey and are considered as false data packets. Accordingly, test 12 is false for data packet 1 and the method continues with step 14 of reception of the same data packet over another channel. In the example, it corresponds to the tuning of the receiver to the frequency of the channel F2 in order to receive data packet number 1.

As the signal over channel F2 is time lagged as compared to the signal over channel F1, the processing from step 8 to step 12 occurs in the time lag and accordingly the same receiver is tuned in due time to receive the packet from the other channel F2.

Step 14 of reception is followed by a step 16 of monitoring the quality of the data packet received from the other channel F2. In the example, it corresponds to the determination of the signal to noise ratio of the data packet number 1 received at the frequency of channel F2.

The method then comprises a test 20 to determine if the quality of this data packet received over the channel F2 is sufficient.

In case test 20 is false, i.e. the quality of the received data packet over the other channel is not sufficient, then the method proceeds to test 22 to determine if the channel over which the data packet has been received in step 14 is the last available channel. If test 22 is false, it means that other channels are still available and accordingly, the method goes back to step 14 for receiving the same packet again over another channel and then monitoring its quality. In case test 20 is true, which means that the quality of the data packet received from channel F2 is sufficient, or in case test 20 is false and test 22 is true, which means that even if the quality of the data packet received from any other available channel is not sufficient there is no other available channel, then the method continues with a step 30 of combination of the data packet received from the reference channel and the data packet received from the other channel to deliver a received data packet. At this stage, step 30 is achieved after receiving data packet 1 from channel F1 and then from channel F2.

For example, the step 30 of combination is also a test in which any data packet the quality of which is inferior to a threshold is discarded which possibly leads to the discarding of all the different versions of a same data packet received over several channels.

In another embodiment, the combination step 30 corresponds to the selection of the data packet presenting the better quality level in order to always deliver a data packet.

Possibly, step 30 can also be a computation and if the data packet can be segmented, a new data packet is constructed by use of segments of data packets received from the reference channel and/or from any other available channel.

After step 30, the method continues as if test 12 is true, i.e. as if the quality of the data packet received over the reference channel is sufficient.

Accordingly, with this method it is possible, within a same burst of data packets, to select for each data packet another channel if the reference channel presents a reception default.

The method continues with a test 32 to determine if the data packet delivered is the last data packet of the burst. In case that test 32 is false the method goes back to step 8 for the reception of the following data packet from the reference channel with the same receiver.

If test 32 is true, which means that there are no more data packet in the burst, the method continues by a step 14 in which the receiver is powered down and thus switched from the active mode into the stand-by or idle mode.

Accordingly, the delivered signal corresponds to the signal represented on the third line of figure 2, in which it can be seen that every time that the data packet received from the reference channel F1 is considered as false, then the delivered signal comprises the same data packet has received from the second channel F2.

It is possible with the method of the invention to provide a better reception by using data packets received over other channels when defaults occur on the reception from the reference channel.

Referring now to figure 3, a receiver 50 is represented.

This receiver comprises an antenna 52 adapted to receive the signal over every different channels, i.e. over every different frequency. It is connected to a tuner 54 which can be set to receive a specific frequency.

The output of the tuner 54 is connected to a buffer 56 which delivers the received signal, and is also connected to an analyzing module 60 adapted to compute the signal to noise ratio of the received signal delivered by the tuner 54.

The receiver 50 also comprises a command unit 62 which receives the quality evaluation delivered by the analyzing module 60 and commands the tuner 54 in order to set the frequency at which the tuner must demodulate the signal. The command unit 62 also commands the buffer 56 to trigger the delivering of the received signal.

The receiver is adapted to be switched between a stand-by mode and an active mode.

When in an idle or stand-by mode, to scan the entire bandwidth in a power economiser mode with the minimum of components powered. When a burst of data packets is detected over one channel, the receiver is powered up and switched to the active mode to process the data packets.

In another embodiment, when in the stand-by mode the entire receiver is turned off between the bursts and the energy of the signal received is used to power it up.

In the embodiment described, the channel over which the signal is received first is set as the reference channel F1.

For each data packet in the burst received from the reference channel, depending on the quality estimation delivered by the analyzing unit 60, the command unit 62 will instruct the same tuner 54 to switch to another channel to received the same data packet again from another channel while retaining the data packet as received from the reference channel in the buffer 56.

The data packet received from another channel is then analyzed in the module 60 and the command unit 62 will then select which one of the data packets received from the reference channel or from the other channel should be delivered by the buffer 56.

Afterward, the command unit 62 commands the tuner 54 to switch back to the reference channel for the reception of the following data packet.

In the embodiment described, the receiver is part of a Digital Television set or a wireless mobile device such as a radio telephone, a personal digital assistant, a laptop or the like.

Of course other embodiments of the invention are also possible.

For example, it is possible before processing a burst of data to scan the bandwidth to determine an order of preference within all the channels and during the method to switch from one to another according to that order of preference.

It is also possible to select as reference channel another channel than the first one. In that case, the other channels are buffered until the quality estimation of the data packets received from the reference channel is achieved.

Yet in another embodiment, every time the quantity of faults monitored in the reception from the reference channel exceeds a predetermined threshold, another channel is determined as the reference channel. In case this threshold is set to one, every time a fault is detected in the reception from the reference channel a new reference channel is set for the reception of the followings data packets.

Furthermore, the invention can be used to receive several signals or services simultaneously. For example, in a carousel transmission, different services or signals can be received as long as their channels are disjointed, i.e. as long as the bursts of data of all the services are not overlapping each other and that the time lag between two bursts over different channels is sufficient for the receiver to switch.

In the example, the receiver is switched in a idle or stand-by mode between the bursts. In another embodiment, this switching between stand-by and active modes is not achieved or at least not systematically.

Also in the example, a unique receiving module is used and is adapted to receive the data from the reference channel and switched to receive the data from another channel when a default occurs. In another embodiment, several tuners are used, each set on one channel, the receiver comprising one processing unit that can be alternatively connected to any of the tuner to receive and process data from one channel or another.

Many other additional embodiments are possible. For example, the method of the invention is executed by a processor program having a sequence of instructions stored on a processor readable medium to cause the processor to switch a receiver in a stand-by mode between bursts containing data packets, and on the reception of a burst to:
- receive data packets of a burst from a reference channel (F1);
- monitor the faults in the reception of the data packets from said reference channel (F1); and
- receive the same data packets from another channel (F2).

This processor program can be integrated in any kind of article as for example, computers, laptops, mobile phones, television decoders, television sets and the like.

Of course the receiver and the program described can be adapted to achieve the method described above.

## Claims

1. Method for receiving a signal comprising bursts of data transmitted over several channels (F1, F2), comprising determining (6) a reference channel (F1) and receiving (8) the bursts from said reference channel (F1), **characterized in that** it also comprises monitoring (10) faults in the reception of the data from said reference channel (F1) and on detection of a fault, receiving (14) the same data from another channel (F2).

2. Method according to claim 1, wherein, for every data received from the reference channel (F1), it comprises
- monitoring (10, 12) the quality of the data upon reception, and
- if the quality is sufficient, the method then comprises delivering this data as the received data ,
- else if the quality is not sufficient the method then comprises:
- receiving (14) the same data over another channel (F2);
- monitoring (16) the quality of the data received from said other channel (F2); and
- combining (30) the data received from the reference channel (F1) and from the other channel (F2) to deliver the received data.

3. Method according to claim 2, wherein if quality is poor, it comprises receiving the same data and monitoring its quality successively over several channels to determine which other channel is to be used to compensate the faults in the reception from the reference channel (F1).

4. Method according to claim 3, wherein receiving and monitoring are achieved over all available channels and the data with the better quality is used.

5. Method according to claim 3, wherein the first data which quality fulfils a predetermined criterion is used.

6. Method according to any of claims 2 to 5, wherein combining (30) comprises comparing the quality between the data received from the reference channel (F1) and the data received from the other channel (F2) in order to keep the data providing the better quality.

7. Method according to any of claims 2 to 5, wherein combining (30) comprises discarding every data which quality does not fulfil predetermined criteria.

8. Method according to any of the claims 1 to 7, wherein it comprises scanning the bandwidth to determine an order of preference within all the available channels.

9. Method according to any of claims 1 to 8, wherein said different channels are time lagged and said reference channel (F1) is set as the first channel over which the signal is received.

10. Method according to any of claims 1 to 8, wherein while receiving the data from said reference channel, it comprises buffering the data from other channels.

11. Method according to any of claims 1 to 10, wherein if the quantity of faults monitored in the reception from said reference channel (F1) exceed a predetermined threshold, it comprises determining another channel as the reference channel.

12. Method according to any of claims 1 to 11, wherein it comprises switching the receiver in a stand-by mode between said bursts of data and switching the receiver to an active mode on reception of a burst.

13. An article **characterized in that** it comprises a processor program having a sequence of instructions stored on a processor readable medium that, when executed by a processor, causes the processor to :
- receive bursts of data from a reference channel (F1);
- monitor the faults in the reception of the data from said reference channel (F1); and
- on detection of a fault, receive the same data from another channel (F2).

14. Receiver for a signal comprising bursts of data comprising a receiving module (54) for receiving said signal over several channels (F1, F2), a module for determining a reference channel (F1) in order to receive the data from said reference channel,
**characterized in that** it also comprises a module for monitoring faults in the reception of data from said reference channel (F1) and a receiving module (54) for receiving the same data from another channel (F2) on detection of a fault.

15. Receiver according to claim 14, wherein it is adapted to achieve the method as described in any of claims 1 to 12.
